# EUROPEAN PATENT SPECIFICATION

(11) **EP 3 447 822 B1**
(45) Date of publication and mention of the grant of the patent: **06.09.2023**
(21) Application number: 17785317.3
(22) Date of filing: 30.03.2017
(51) Int. Cl.: H01M 10/52

(54) **COMPOSITE SEPARATOR CONTAINING AROMATIC POLYAMIDE AND MANUFACTURING METHOD THEREOF, AND SECONDARY BATTERY**
VERBUNDSEPARATOR MIT AROMATISCHEM POLYAMID UND HERSTELLUNGSVERFAHREN DAFÜR SOWIE SEKUNDÄRBATTERIE
SÉPARATEUR COMPOSITE CONTENANT UN POLYAMIDE AROMATIQUE ET SON PROCÉDÉ DE FABRICATION, ET BATTERIE SECONDAIRE

(30) Priority: 19.04.2016 CN 201610246984
(43) Date of publication of application: 27.02.2019
(73) Proprietor: Microvast Power Systems Co., Ltd., Huzhou, Zhejiang 313000 (CN)
(72) Inventor: SUN, Qingjin, Beijing 100083 (CN); LI, Xiang, Beijing 100083 (CN)
(74) Representative: Haseltine Lake Kempner LLP
(86) International application number: PCT/CN2017/078832
(87) International publication number: WO 2017/181832

(56) References cited:
- WO-A1-2006/123811
- WO-A1-2015/120810
- CN-A- 102 522 513
- CN-A- 103 515 557
- JP-A- 2015 046 287

## Description

### FIELD OF THE INVENTION

The present disclosure relates to an aromatic polyamide composite separator, a method for preparing the same and a secondary battery having the same.

### BACKGROUND OF THE INVENTION

As an outstanding representative of the new energy industry, lithium secondary battery shows a booming development trend recently. Particularly, in electric vehicle fields ,the supply of power batteries with high rate charge-discharge performance couldn't meet the requirements in the market. As lithium secondary batteries are more widely applied in electric vehicles, safety has become one of the most important test standards for lithium batteries. Further, lithium battery separator is the first line to guarantee cell safety. Currently, widely-used separators in lithium batteries are mainly polyolefin separators after melted and stretched. Shutdown effect owned by such materials would help to improve safety performance when lithium batteries transfer heat.

However, when a localized internal short circuit occurs in the batteries, the local heat would make the maximum transient temperature of the short-circuit up to 600°C. Meanwhile, the melting point of the polyolefin materials is about 160°C or even lower. Because of this, the separator would melt before getting the shutdown effect, large area short-circuits would occur between electrodes, and heat produced therein would lead to electrolyte vaporization, and further lead to fire or explode. The disadvantage of the polyolefin separator lies in that it has performance of the lithium secondary batteries decreases. Therefore, the polyolefin separator is not very suitable to be applied in lithium-ion power batteries of electric vehicles.

Aromatic polyamide polymers (such as PPTA, PMIA, PBA, PSA) have a high heat-resistance performance with a glass transition temperature of above 300°C and thermal decomposition temperature up to 560°C. Besides, they also have high insulation performance and chemical erosion resistance. Because of these, aromatic polyamide polymers are good choices for lithium battery separator. In practice, aramid fibers have been applied in lithium battery separator, as described in Chinese Patent Publication Nos. CN103242556A and CN202384420U. As described therein, aromatic polyamide polymer fibers are coated on surfaces of polyolefin separator. However, limited by the properties of polyolefin material itself, application of such method has been greatly reduced.

### SUMMARY OF THE INVENTION

To solve the problems above, the present disclosure provides an aromatic polyamide composite separator. The aromatic polyamide composite separator includes glass fiber and aromatic polyamide, and a thermal shrinkage percentage of the composite separator is less than 3% at 300°C. In one embodiment, the thermal shrinkage percentage of the composite separator is less than 1% at 300°C. The aromatic polyamide is coated on the glass fiber.

In one embodiment, the thermal shrinkage percentage of the composite separator is less than 3% at 300°C. In another embodiment, the thermal shrinkage percentage of the composite separator is less than 1% at 300°C. In one embodiment, the thermal shrinkage percentage of the composite membrane is less than 5% at 500°C. In another embodiment, the thermal shrinkage percentage thereof is less than 3% at 500°C. In still another embodiment, the thermal shrinkage percentage thereof is less than 1%. The thermal shrinkage percentage includes TD (Transverse Direction) thermal shrinkage percentage and MD (Machine Direction) thermal shrinkage percentage.

In one embodiment, an air permeability of the composite separator is 50-500s/100cc; in another embodiment, the air permeability of the composite separator is 80-300s/100cc; in still another embodiment, the air permeability of the composite separator is 90-200s/100cc.

In one embodiment, a thickness of the composite separator is 12-40µm; in another embodiment, the thickness of the composite separator is 15-30µm; in still another embodiment, the thickness of the composite separator is 18-25µm.

In one embodiment, a tensile strength of the composite separator is 50-300MPa; in another embodiment, the tensile strength of the composite separator is 80-250MPa; in still another embodiment, the tensile strength of the composite separator is 100-200MPa.

According to embodiments of the present disclosure, the aromatic polyamide is at least one selected from the group consisting of poly(p-phenylene terephthalamide) (Aramid 1414, abbr. as PPTA), poly(m-phenylene isophthalamide) (Aramid 1313, abbr. as PMIA), poly(p-benzamide) (Aramid □, abbr. as PBA) and polysulfone amide (abbr. as PSA). Aromatic polyamide polymers such as PPTA, PMIA, PBA, PSA have a high heat-resistance performance with a glass transition temperature of above 300°C and thermal decomposition temperature up to 560°C, they have no definite melting point. Besides, they also have high insulation performance, chemical resistance, and self-extinction function. Because of this, aromatic polyamide polymers are best choices for lithium battery separator.

Within the composite separator, a porosity of the aromatic polyamide is 40-80% in one embodiment; in another embodiment, the porosity of the aromatic polyamide is 45-75%; in still another embodiment, the porosity of the aromatic polyamide is 50-70%. In one embodiment, a content of the aromatic polyamide in the composite separator is 10-60wt%; in another embodiment, the content of the aromatic polyamide in the composite separator is 20-50wt%.

Glass fibers are inorganic non-metallic materials with good performance. They are inorganic materials undergoing melt at high temperature, having no definite melting point. A softening temperature thereof is at 600-800°C. Under the softening temperature, no chemical change takes place on glass fibers. Above the softening temperature, the glass fibers merely become soft and melt, and no flame phenomenon occurs. Glass fibers are mainly applied in the fields of heat insulation, fire resistance and flame retardant. When such materials encounter with flame burning, they would absorb large quantities of heat, prevent flame transmission and isolate air. Hence, applying glass fibers in separators helps to improve mechanic performance and heat resistance of the separator.

According to embodiments of the present disclosure, the glass fibers appear to be fiberglass fabric. Preferable fiberglass fabric is woven from long glass fibers, which is a good support to the separator; a heat stability of above fiberglass fabric is better than that of glass fibers. Hence, applying the fiberglass fabric into separator plays an important role in improving heat resistance of the separator.

The fiberglass fabric is preferably made of monofilament glass fibers by weaving method. The fiberglass fabric is prepared by the following steps: first, stretching glass to form very thin glass yarns which have good flexibility, a diameter of single yarn is in a range from several micrometers to two-dozen micrometers; second, spinning the glass yarns and weaving the yarns to obtain the fiberglass fabric. To achieve thin and light separators, the weaving method in the present disclosure is selected from plain weaving, twill weaving, satin weaving, leno weaving, cracked twill weaving or double-layer weaving etc.; preferably, the weaving method is plain weaving.

In one embodiment, a thickness of the fiberglass fabric in the present disclosure is in a range of 8-50µm; in another embodiment, the thickness of the fiberglass fabric is in a range of 10-30µm; in still another embodiment, the thickness of the fiberglass fabric is in a range of 12-30µm. In one embodiment, a diameter of monofilament glass fiber in the fiberglass fabric is less than or equals to 15µm; in another embodiment, the diameter of monofilament glass fiber in the fiberglass fabric is less than or equals to 8µm; in still another embodiment, the diameter of monofilament glass fiber in the fiberglass fabric is less than or equals to 5µm.

The present disclosure also provides a method for preparing the aromatic polyamide composite separator. The method includes the following steps: (1) providing at least one ionic liquid, at least one aromatic polyamide and at least one solvent, mixing the above to form a mixed solution; (2) immersing glass fibers into the mixed solution, or coating the mixed solution onto surfaces of the glass fibers, and then preparing membrane in coagulation bath from the glass fibers immersed with or coated with the mixed solution; (3) displacing the ionic liquid and solvents from the membrane by an extractant, and drying the membrane to yield the composite separator.

According to the embodiments of the present disclosure, step (3) includes the following steps: displacing ionic liquid and solvents from the membrane by an extractant, drying the membrane, and then treating the membrane under high-temperature to yield the composite separator. In one embodiment, the high-temperature treatment is air-hot air heating and/or infrared heating. In one embodiment, a temperature of the high-temperature treatment is in a range of 200-350°C; in another embodiment, the temperature of the high-temperature treatment is 250-300°C. In one embodiment, a time of the high-temperature treatment is 5-30 minutes; in another embodiment, the time of the high-temperature treatment is 10-20 minutes.

The glass fiber in the present disclosure itself has good heat resistance, which greatly improves the heat-resistance and stability of the prepared composite separator; further, high-temperature treatment makes the membrane to shrink under high temperature, after that, shrink phenomenon would not occur later when the membrane is used under high temperature, which greatly increases the safety of the lithium secondary battery.

The ionic liquid is a liquid substance, which is entirely comprised of the ionic composition. Since the ionic liquid remains liquid at room temperature or a lower temperature, it is described as a room temperature molten salt or a low-temperature molten salt or a liquid organic salt. There are many types of ionic liquids, and according to different organic cations, ionic liquids can be divided into quaternary ammonium salts, quaternary phosphonium salts, nitrogen heterocyclic onium salts, etc., for example, nitrogen heterocyclic typed ionic liquids include imidazolium onium salts, pyridinium onium salts, piperidinium salts, pyrrolidine salts, etc.. Structures of cations of several common ionic liquids are as follows:

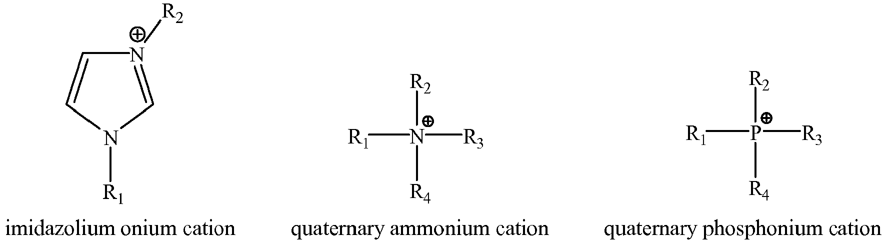

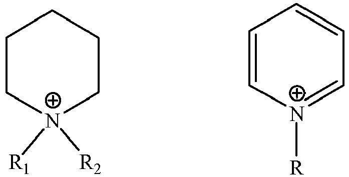

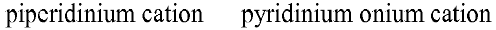

There are various types of anions which could constitute ionic liquids, wherein inorganic anions include: F⁻, Cl⁻, Br⁻, I⁻, NO₃⁻, CO₃²⁻, PF₆⁻, BF₄⁻, C₂O₄²⁻, SO₄²⁻, PO₄³⁻, Al₂Cl₇⁻, etc., while organic anions include: CH₃COO⁻, CH₃SO₃⁻, CF₃SO₃⁻, C₄H₉SO₃⁻, CF₃COO⁻, N(FSO₂)₂⁻, N(CF₃SO₂)₂⁻, N(C₂F₅SO₂)₂⁻, N(C₄F₉SO₂)₂⁻, N[(CF₃SO₂)(C₄F₉SO₂)] ⁻, C(CF₃SO₂) ₃⁻, etc..

In the present disclosure, in order to endow the aromatic polyamide coating with a porous network structure and good porosity, it is needed to add ionic liquid(s) as porogen during preparation.

In the present disclosure, ionic liquids are selected as a porogen, which has the following advantages: (1) As ionic substances, ionic liquids have properties of both salt and organics; because of this, ionic liquids have a good dissolving ability. (2) Ionic liquids have better thermal stability and chemical stability. For example, the thermal decomposition temperature of most ionic liquids is higher than 400°C, which is greatly different from the boiling point of general solvents. Such a difference helps the ionic liquids to separate from other solvents and to be recycled later. (3) Ionic liquids have no flash point and have high ignition points, which could guarantee their safety during the usage and recycle thereof.

Preferably, the ionic liquid is at least one selected from the group consisting of quaternary ammonium salts, quaternary phosphonium salts, imidazolium onium salts, pyridinium onium salts, piperidinium salts and pyrrolidine salts. Such kind of ionic liquid is more easily to be dissolved in polar solvents and be prepared as an ionic liquid solution.

In the present disclosure, the aromatic polyamide is at least one selected from the group consisting of poly(p-phenylene terephthamide), poly(m-phenylene isophthalamide), poly(p-benzamide) and polysulfone amide. In one embodiment, the aromatic polyamide is aromatic polyamide fibers.

In the present disclosure, during preparation, when adding ionic liquid as a porogen, a ratio of the ionic liquid to the aromatic polyamide should be adjusted according to the needed porosity of the membrane. After long-term research, the applicant discovers that when a mass ratio of the ionic liquid to the aromatic polyamide is in a range from 2:1 to 10:1, the yielded composite separator would have uniform hole distribution and moderate porosity; in one embodiment, the mass ratio of the ionic liquid to the aromatic polyamide is in a range from 3:1 to 9:1; in another embodiment, the mass ratio of the ionic liquid to the aromatic polyamide is in a range from 3:1 to 6:1.

In the present disclosure, there is no limitation on how to prepare the mixed solution of the ionic liquid and the aromatic polyamide. The preparation is preferably realized by one of the following:
In one embodiment, a method for preparing the mixed solution thereof in step (1) includes the following in detail: first, mixing an ionic liquid with a first solvent to form an ionic liquid solution; second, mixing an aromatic polyamide with a second solvent to form an aromatic polyamide solution; finally, mixing the ionic liquid solution with the aromatic polyamide solution to yield the mixed solution. The aromatic polyamide is aromatic polyamide fiber. There is no limitation on the form of the aromatic polyamide fiber, for example, it is chopped fiber, fibrid, or other aromatic polyamide fibers commonly used in membrane preparation.

In another embodiment, a method for preparing the mixed solution thereof in step (1) includes the following in detail: first, mixing an ionic liquid with a first solvent to form an ionic liquid solution; second, forming an aromatic polyamide solution through a polymerization, wherein a second solvent is applied during the polymerization; finally, mixing the ionic liquid solution with the aromatic polyamide solution to yield the mixed solution. There is no limitation to the implementation of the polymerization, for example, it can be implemented in a twin-screw extruder or a reaction kettle.

In yet another embodiment, a method for preparing the mixed solution thereof in step (1) includes the following in detail: mixing an ionic liquid, an aromatic polyamide and a third solvent to yield the mixed solution. The aromatic polyamide is preferably aromatic polyamide fiber. There is no limitation on the forms of the aromatic polyamide fibers, for example, it is chopped fiber, fibrid, or other aromatic polyamide fibers commonly used in membrane preparation.

In the present disclosure, the first solvent refers to a solvent which can dissolve the ionic liquid; the second solvent refers to a solvent which can dissolve the aromatic polyamide; and the third solvent refers to a solvent which can dissolve both the ionic liquid and the aromatic polyamide.

In the present disclosure, the first solvent refers to a solvent which can dissolve the ionic liquid. Preferably, the first solvent is at least one selected from the following: water, ethanol, propanol, isopropanol, glycerol, tetrahydrofuran, pyridine, dichloromethane, trichloromethane, ethyl acetate, N,N-dimethyl formamide, N,N-dimethyl acetamide, N-methyl pyrrolidone and polyethylene glycol.

In the present disclosure, the second solvent refers to a solvent which can dissolve the aromatic polyamide. In one embodiment, the second solvent is at least one selected from the following: N-methyl pyrrolidone (NMP), N, N-dimethyl acetamide (DMAC), N,N-dimethyl formamide (DMF), dimethyl sulfoxide (DMSO) and triethyl phosphate (TEP).

In one embodiment, a mass ratio of the first solvent to the ionic liquid is in a range from 0.05:1 to 0.8:1. In another embodiment, the mass ratio of the first solvent to the ionic liquid is in a range from 0.1:1 to 0.5:1.

In one embodiment, a mass ratio of the second solvent to the aromatic polyamide is in a range from 4:1 to 15:1. In another embodiment, the mass ratio of the second solvent to the aromatic polyamide is in a range from 5:1 to 10:1.

In the present disclosure, the third solvent refers to a solvent which can dissolve both the ionic liquid and the aromatic polyamide. In one embodiment, the third solvent is at least one selected from below: N-methyl pyrrolidone, N,N-dimethyl acetamide, N,N-dimethyl formamide and dimethyl sulfoxide.

In one embodiment, a mass fraction of the third solvent in the mixed solution is 20-80%. In another embodiment, the mass fraction of the third solvent in the mixed solution is 40-70%.

In one embodiment, the coagulation bath includes a first component. The first component is water or dichloromethane. In another embodiment, the coagulation bath merely includes water or dichloromethane, that is, a mass fraction of water or dichloromethane in the coagulation bath is 100%.

In another embodiment, the coagulation bath further includes a second component. The second component is at least one selected from the following: N-methyl pyrrolidone, N,N-dimethyl acetamide, N,N-dimethyl formamide, dimethyl sulfoxide and triethyl phosphate. The second component herein is mainly selected from solvents which can dissolve aromatic polyamide, which helps to decrease a crystallization rate of the aromatic polyamide. The choice of the solvent is different according to different preparation. For example, in an embodiment, the mixed solution is prepared by the following: first dissolving the ionic liquid and the aromatic polyamide separately into a solvent and then mixing. The second component is selected from the components of the second solvent mentioned above, i.e., the second component is selected at least one of N-methyl pyrrolidone, N,N-dimethyl acetamide, N,N-dimethyl formamide, dimethyl sulfoxide and triethyl phosphate. For another example, when certain kind of solvent is selected to prepare the mixed solution and this kind of solvent can dissolve both the ionic liquid and the aromatic polyamide, the second component can be selected from the components of the third solvent mentioned above, i.e., the second component is at least one selected from N-methyl pyrrolidone, N,N-dimethyl acetamide, N,N-dimethyl formamide and dimethyl sulfoxide. In conclusion, the second component in the coagulation bath is selected to be in accordance with the solvent applied during the preparation of the aromatic polyamide solution. For example, in an embodiment wherein N,N-dimethyl acetamide (DMAC) solvent is applied to prepare the aromatic polyamide solution, the second component in the coagulation bath is water, a combination of water and DMAC, dichloromethane, or a combination of dichloromethane and DMAC etc..

At the existence of other solvents, a mass fraction of water or dichloromethane in the coagulation bath is in a range of 10-99.9%. In one embodiment, the mass fraction of water or dichloromethane in the coagulation bath is in a range of 20-80%. In another embodiment, the mass fraction of water or dichloromethane in the coagulation bath is in a range of 30-60%.

In an embodiment, a temperature of the coagulation bath is 0-80°C. In another embodiment, the temperature of the coagulation bath is 20-60°C.

In the present disclosure, both the temperature of the coagulation bath and the concentration of the components in the coagulation bath all have a great effect on the structure of the yielded porous membrane. On one hand, the concentration of water or dichloromethane would optimize a diffusion rate of the solvents passing through the coating, such concentration facilitates the formation of a good porous structure. The reason as below: too high a concentration of water or dichloromethane would make the porous membrane to form a compact layer, which increases an air permeation time. Meanwhile, too low a concentration of water or dichloromethane would make the casting slurry hard to cure and form the membrane. On the other hand, the temperature of the coagulation bath would facilitate the solvent in the coating to quickly spread into the coagulation bath, leaving the rest alone, in this way, a better porous structure is formed thereby. In the present disclosure, under the premise that suitable concentration of water or dichloromethane is selected in advance, too low a temperature of the coagulation bath would make the solvent inside the coating to spread to the coagulation bath very slowly, because of this, the yielded coating would have low porosity and small aperture; on the contrary, too high a temperature would make the coating to form finger-like pores, and lead to over-high porosity of the coating. In conclusion, two factors, i.e., both the temperature of the coagulation bath and the concentration of the components in the coagulation bath, play important roles on the formation of excellent porous structure in the coating, especially, the cooperation of both factors above would achieve a better porous membrane.

In one embodiment, a time for the mixed solution to form a membrane in the coagulation bath is 10-250 seconds. In another embodiment, the time for the mixed solution to form a membrane in the coagulation bath is 20~150 seconds.

In one embodiment, the extractant is at least one selected from water, dichloromethane, trichloromethane and ethanol. In another embodiment, a temperature of the extractant is 20-100°C. In yet another embodiment, the temperature of the extractant is 30-80°C.

In one embodiment, the "drying" in step (3) refers to infrared drying and/or hot air drying.

In one embodiment, a drying temperature in step (3) is 50-150°C In another embodiment, the drying temperature therein is 80-120°C.

In one embodiment, a method for preparing the aromatic polyamide porous membrane includes the following: first, mixing an ionic liquid, an aromatic polyamide and a solvent together to form a mixed solution; second, immersing fiberglass fabric into the mixed solution to form a coated fiberglass fabric; introducing the coated fiberglass fabric into a coagulation bath to form membrane; and displacing the ionic liquid and the solvent from the membrane by an extractant, drying and treating the rest of the membrane under high-temperature to yield an aromatic polyamide porous membrane.

Meanwhile, the present disclosure still provides a lithium ion secondary battery, which includes the aromatic polyamide composite separator prepared above.

To make the above-mentioned purposes, characteristics and advantages more apparent and understandable, detailed description accompanying preferred embodiments are given below.

### BRIEF DESCRIPTION OF THE DRAWINGS

FIG. 1 shows an SEM photograph of surfaces of the aromatic polyamide composite separator prepared in embodiment 1.
FIG. 2 shows an SEM photograph of a cross-section of the aromatic polyamide composite separator prepared in embodiment 1.

### DETAILED DESCRIPTION OF PREFERRED EMBODIMENTS

The present disclosure will now be described more specifically with reference to the following embodiments. It is to be noted that the following descriptions of preferred embodiments of this invention are presented herein for purpose of illustration and description only. It is not intended to be exhaustive or to be limited to the precise form disclosed.

In the present disclosure, thermal shrinkage percentage test, air permeability test, tensile strength test and porosity test are conducted to the separators prepared in embodiments 1, 4, 6, 8 and 10, and results obtained are listed in table 2; further, thermal shrinkage percentage test is also conducted to polyolefin separator, aluminum oxide coating polyolefin separator and aluminum oxide coating PET separator, wherein PET is an abbreviation of poly(ethylene terephthalate); results are listed in table 1. Specific methods for the tests above are described as below:

Thermal shrinkage percentage test: first, measuring a length A1 and a width B1 of a separator separately; next, placing the measured separator into an oven with certain temperature and heating it for an hour; and then, taking out the separator from the oven and cool it to room temperature; finally, measuring the length A2 and width B2 of the separator for the second time. An MD thermal shrinkage percentage of the separator equals to (1-A2/A1)×100%; and a TD thermal shrinkage percentage of the separator equals to (1-B2/B1)×100%.

Air permeability test: Detecting a time needed for 100cc airflow to pass through a separator at stable pressure by a gas transmission rate tester, wherein a size of the separator is 60mm×100mm, and the gas transmission rate tester is Gurley-4320-controller digital timer/auto counter (matching with Gurley-4110) importing from the US.

Tensile strength test: detecting a tensile strength of a separator at a speed of 20mm/min by an electronic universal tester QJ210C, wherein a size of the separator is 150mm×25mm, and the electronic universal tester is produced by Shanghai Qingji Instrumentation Science &Technology Co., LTD.

Porosity test: the porosity values are calculated by the formula below, (1-(W-L1×L2×K)/ρ1/(L1×L2×D-L1×L2×K/ρ2))×100%, wherein W represents for quality of a sample (g); K represents for basis weight of the fiberglass fabric (g/cm²); ρ1 represents for density of the aromatic polyamide (g/cm³); ρ2 represents for density of the glass fiber (g/cm³); L1 represents for length of the sample (mm); L2 represents for width of the sample (mm); and D represents for thickness of the sample (mm).

### Embodiment 1

First, polymerizing in a reaction tank to obtain a poly (m-phenylene isophthalamide) solution 4500g, wherein DMAC acting as the solvent, and a mass percentage concentration of the poly (m-phenylene isophthalamide) is 9%. Second, mixing 2300g of N-methyl-N-propyl pyrrolidinium tetrafluoroborate with 700g of anhydrous ethanol in a stirred tank to obtain an ionic liquid solution. Third, injecting the poly (m-phenylene isophthalamide) solution into the stirred tank to mix with the ionic liquid solution therein uniformly to obtain a uniformly mixed solution. Fourth, injecting the uniformly mixed solution into a coating tank. Fifth, immersing a fiberglass fabric into the mixed solution in the coating tank to form a coated-fiberglass fabric, wherein a thickness of initial fiberglass fabric is 12µm and a monofilament diameter thereof is 4.5µm. Sixth, taking the coated fiberglass fabric out from the mixed solution, and then press-rolling the coated fiberglass fabric to form a coated-membrane with uniform thickness. Seventh, putting the coated-membrane into a coagulation bath, wherein the coagulation bath is a mixed solvent of water and DMAC, a mass fraction of water is 50%, a temperature of the coagulation bath is 60 °C and a gel time thereof is 20 seconds. Eighth, pulling the coated-membrane into an extraction tank whose temperature is 90°C, wherein the coated-membrane is extracted with water to remove the solvents therein, in this way, the coated poly (m-phenylene isophthalamide) membrane is endowed with porous network structures, and turns to be a porous-structured composite membrane. Finally, drying the porous-structured composite membrane with hot air at a drying temperature of 120°C, and heat-treating in a hot air oven at 250°C for 40 minutes to yield the aromatic polyamide composite separator.

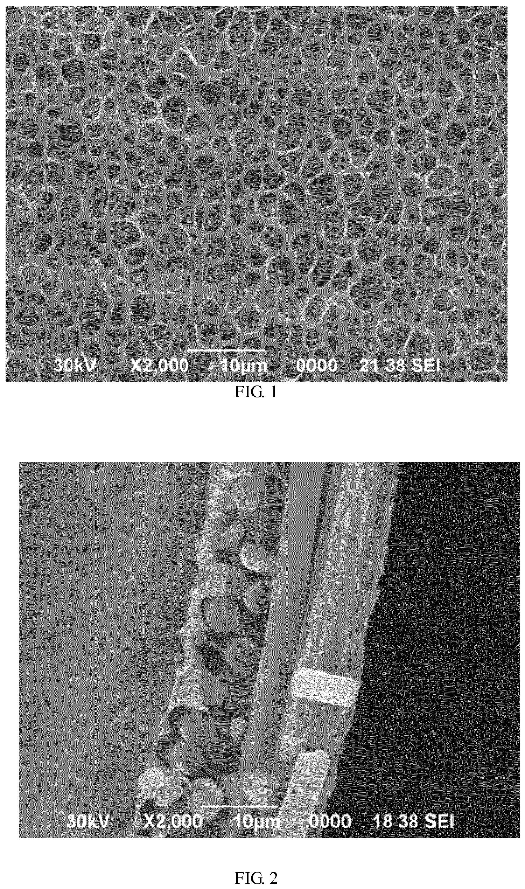

FIG. 1 shows an SEM photograph of surfaces of the aromatic polyamide composite separator prepared in embodiment 1 and FIG. 2 shows an SEM photograph of a cross-section of the aromatic polyamide composite separator prepared in embodiment 1.

Thermal shrinkage percentage tests are conducted to the composite separator prepared in embodiment 1 and other commercial separators separately. To be specific, other commercial separators refer to an aluminum oxide coating PET separator, an aluminum oxide coating polyolefin separator and a polyolefin separator. Results are listed in Table 1, wherein "TD" represents for the TD thermal shrinkage percentage, "MD" represents for an MD thermal shrinkage percentage, and "PET" is an abbreviation of polyethylene terephthalate. As shown in Table 1, the thermal shrinkage percentage of the composite separator prepared in embodiment 1 is still less than 2% even at 600°C. In contrast, the aluminum oxide coating PET separator has already cracked at 300°C and is not suitable to be tested at 300°C or higher temperature; further, even tested under 300°C, the thermal shrinkage percentage of the aluminum oxide coating PET separator is higher than that of the composite separator prepared in embodiment 1. Meanwhile, both the aluminum oxide coating polyolefin separator and polyolefin separator have also cracked or shrunk into a mass at 200°C, not suitable to be tested at 200°C or above; further, their thermal shrinkage percentage at 120°C is far higher than that of the composite separator prepared in embodiment 1. In conclusion, the composite separator of the present disclosure has excellent thermal stability performance.

### Embodiment 2

Embodiment 2 is similar with embodiment 1, and the differences lie in that, 230g of deionized water is mixed with 2300g of N-methyl-N-propyl pyrrolidinium tetrafluoroborate uniformly at the stirred tank to obtain an ionic liquid solution.

### Embodiment 3

Embodiment 3 is similar with embodiment 2, and the differences lie in that, the coagulation bath is water, the temperature of the coagulation bath is 80°C, and the gel time thereof is 10 seconds, the drying temperature is 150°C.

### Embodiment 4

First, polymerizing in a reaction tank to obtain 2670g of polysulfone amide solution, wherein NMP acting as a solvent, and a mass percentage concentration of polysulfone amide is 10%. Second, mixing 800g of 1-methyl-3-propyl imidazolium acetate and 40g of ethyl acetate uniformly in a stirred tank to obtain an ionic liquid solution. Third, injecting the polysulfone amide solution into the stirred tank to mix with the ionic liquid solution therein uniformly to obtain a uniform mixed solution. Fourth, injecting the uniform mixed solution into a coating tank. Fifth, immersing a fiberglass fabric into the mixed solution in the coating tank to form a coated-fiberglass fabric, wherein a thickness of initial fiberglass fabric is 14µm and a monofilament diameter of the fiberglass fabric is 5µm. Sixth, taking the coated fiberglass fabric out from the mixed solution, and then press-rolling the coated fiberglass fabric to form a coated-membrane with uniform thickness. Seventh, putting the coated-membrane into a coagulation bath, wherein the coagulation bath is mixed solvents of water and NMP, a mass fraction of water is 30%, a temperature of the coagulation bath is 50°C and a gel time thereof is 100 seconds. Eighth, pulling the coated-membrane into an extraction tank whose temperature is 80°C, wherein the coated-membrane is extracted with water to remove the solvents therein, in this way, the coated-polysulfone amide membrane is endowed with porous network structures, and turns to be a porous-structured composite membrane. Finally, drying the porous-structured composite membrane with infrared rays at a drying temperature of 120°C, and heat-treating in a hot air oven at 200°C for 40 minutes to yield the aromatic polyamide composite separator.

### Embodiment 5

First, polymerizing by twin-screw to obtain a poly (m-phenylene isophthalamide) solution 1000g, wherein DMAC acting as a solvent, and a mass percentage concentration of the poly (m-phenylene isophthalamide) is 20%. Second, mixing 2000g of methyl triethyl ammonium acetate with 200g of deionized water uniformly in a stirred tank to obtain an ionic liquid solution, wherein the stirred tank being heated to 50°C. Third, injecting the obtained poly (m-phenylene isophthalamide) solution into the stirred tank to mix with the ionic liquid solution uniformly to obtain a uniform mixed solution. Fourth, injecting the uniform mixed solution into a coating tank. Fifth, immersing a fiberglass fabric into the mixed solution in the coating tank to form a coated-fiberglass fabric, wherein a thickness of initial fiberglass fabric is 15µm and a monofilament diameter thereof is 5µm. Sixth, taking the coated fiberglass fabric out from the mixed solution, and then press-rolling the coated fiberglass fabric to form a coated-membrane with uniform thickness. Seventh, putting the coated-membrane into a coagulation bath, wherein the coagulation bath is mixed solvents of water and DMAC, a mass fraction of water is 20%, a temperature of the coagulation bath is 40°C and a gel time thereof is 150 seconds. Eighth, pulling the coated-membrane into an extraction tank whose temperature is 80°C, wherein the coated-membrane is extracted with water to remove the solvents therein, in this way, the coated poly (m-phenylene isophthalamide) membrane is endowed with porous network structures, and turns to be a porous-structured composite membrane. Finally, drying the porous-structured composite membrane with hot air at a drying temperature of 120°C, and heat-treating under an infrared lamp at 250°C for 30 minutes to yield the aromatic polyamide composite separator.

### Embodiment 6

First, polymerizing in a reaction tank to obtain a poly(*p*-phenylene terephthamide) solution 2000g, wherein DMF acting as a solvent, and a mass percentage concentration of poly(*p*-phenylene terephthamide) is 6.25%. Second, mixing 800g of 1-methyl-3-butyl imidazolium hydrochloride and 100g of dichloromethane in a stirred tank uniformly to obtain an ionic liquid solution, wherein the stirred tank being heated to 50°C. Third, injecting the poly(*p*-phenylene terephthamide) solution into the stirred tank to mix with the ionic liquid solution therein uniformly to obtain a uniform mixed solution. Fourth, injecting the uniformly mixed solution into a coating tank. Fifth, immersing a fiberglass fabric into the mixed solution in the coating tank to form a coated-fiberglass fabric, wherein a thickness of initial uncoated fiberglass fabric is 12µm and a monofilament diameter thereof is 4.5µm. Sixth, taking the coated fiberglass fabric out from the mixed solution, and then press-rolling the coated fiberglass fabric to form a coated-membrane with uniform thickness. Seventh, putting the coated-membrane into a coagulation bath, wherein the coagulation bath is a mixed solvent of dichloromethane and DMF, a mass fraction of dichloromethane is 30%, a temperature of the coagulation bath is 20°C and a gel time thereof is 150 seconds. Eighth, pulling the coated-membrane into an extraction tank whose temperature is 30°C, wherein the coated-membrane is extracted with dichloromethane to remove the solvents therein, in this way, the coated poly(p-phenylene terephthamide) membrane is endowed with porous network structures, and turns to be a porous-structured composite membrane. Finally, the porous-structured composite membrane undergoing a hot air drying at a drying temperature of 80°C, and heat-treating in a hot air oven at 350°C for 10 minutes to yield the aromatic polyamide composite separator.

### Embodiment 7

Embodiment 7 is similar to embodiment 6, and the differences lie in that, the coagulation bath is dichloromethane, and the temperature of the extraction tank is 20°C.

### Embodiment 8

First, dissolving 200g of poly (*m*-phenylene isophthalamide) chopped fiber into 1000g of DMAC solvent to obtain a poly (m-phenylene isophthalamide) solution, wherein a mass percentage concentration of poly (m-phenylene isophthalamide) being 16.7%. Second, mixing 600g of methyl tri-butyl ammonium hydrochloride with 300g of deionized water in a stirred tank to obtain an ionic liquid solution, wherein the stirred tank being heated to 50°C. Third, injecting the obtained ionic liquid solution and the poly (m-phenylene isophthalamide) solution separately into a tri-screw extruder, and mixing the solutions uniformly therein to obtain a uniformly mixed solution. Fourth, injecting he uniformly mixed solution into a coating tank. Fifth, immersing a fiberglass fabric into the mixed solution in the coating tank to form a coated-fiberglass fabric, wherein a thickness of initial fiberglass fabric is 15µm and a monofilament diameter thereof is 5µm. Sixth, taking the coated fiberglass fabric out from the mixed solution, and then press-rolling the coated fiberglass fabric to form a coated-membrane with uniform thickness. Seventh, putting the coated-membrane into a coagulation bath, wherein the coagulation bath is a mixed solvent of water and DMAC, a mass fraction of water is 30%, a temperature of the coagulation bath is 50°C, and a gel time thereof is 80 seconds. Eighth, pulling the coated-membrane into an extraction tank whose temperature is 80°C, wherein the coated-membrane is extracted with water to remove the solvents therein, in this way, the old poly (m-phenylene isophthalamide) membrane is endowed with porous network structures, and turns to be a porous-structured composite membrane. Finally, drying the porous-structured composite membrane with infrared rays at a drying temperature of 120°C, and heat-treating under an infrared lamp at 250°C for 15 minutes to yield the aromatic polyamide composite separator.

### Embodiment 9

First, dissolving 200g of p-benzamide and polysulfone amide chopped fiber into 1000g of DMAC solvent to obtain a polymer solution, wherein a mass percentage concentration of the polymer being 16.7%. Second, mixing 400g of methyl tri-n-butyl phosphonium hydrochloride with 320g of dichloromethane in a stirred tank to obtain an ionic liquid solution. Third, injecting the obtained ionic liquid solution and the p-benzamide and polysulfone amide chopped fiber polymer solution separately into a mixing tank, and stirring uniformly therein under negative pressure to obtain a uniform mixture. Fourth, injecting the uniform mixture into a coating tank. Fifth, immersing a fiberglass fabric into the mixed solution in the coating tank to form a coated-fiberglass fabric, wherein a thickness of initial fiberglass fabric is 20µm and a monofilament diameter thereof is 6µm. Sixth, taking the coated fiberglass fabric out from the mixed solution, and then pressing-rolling the coated fiberglass fabric to form a coated-membrane with uniform thickness. Seventh, putting the coated-membrane into a coagulation bath, wherein the coagulation bath is a mixed solvent of dichloromethane and DMAC, a mass fraction of dichloromethane is 10%, a temperature of the coagulation bath is 0°C and a gel time thereof is 250 seconds. Eighth, pulling the coated-membrane into an extraction tank whose temperature is 30 °C, wherein the coated-membrane is extracted with dichloromethane to remove the solvents therein; in this way, the coated-membrane, i.e., the coated p-benzamide and polysulfone amide membrane, is endowed with porous network structures, and turns to be a porous-structured composite membrane. Finally, hot air drying the porous-structured composite membrane at a drying temperature of 50°C, and heat-treating in a hot air oven at 300°C for 8 minutes to yield the aromatic polyamide composite separator.

### Embodiment 10

First, mixing 600g of methyl tri-butyl ammonium hydrochloride with 2400g of DMAC uniformly to form a first mixed solution. Second, adding 400g of polysulfone amide chopped fiber into the first mixed solution above, heating to 80°C, and stirring uniformly under negative pressure to form a second mixed solution. Third, injecting the obtained second mixed solution into a coating tank. Fourth, immersing a fiberglass fabric into the second mixed solution in the coating tank to form a coated-fiberglass fabric, wherein a thickness of initial fiberglass fabric is 12µm and a monofilament diameter thereof is 4.5µm. Sixth, taking the coated fiberglass fabric out from the second mixed solution, and then press-rolling the coated fiberglass fabric to form a coated-membrane with uniform thickness. Seventh, putting the coated-membrane into a coagulation bath, wherein the coagulation bath is a mixed solvent of dichloromethane and DMAC, a mass fraction of dichloromethane is 20%, a temperature of the coagulation bath is 40°C and a gel time thereof is 180 seconds. Eighth, pulling the coated-membrane into an extraction tank whose temperature is 30°C, wherein the coated-membrane is extracted with dichloromethane to remove the solvents therein, in this way, the coated-membrane, i.e., the coated polysulfone amide membrane is endowed with porous network structures, and turns to be a porous-structured composite membrane. Finally, hot air drying the porous-structured composite membrane at a drying temperature of 80°C, and heat-treating in a hot air oven at 280°C for 20 minutes to yield the aromatic polyamide composite separator.

Test results on the performances of the composite separators prepared in embodiments 1, 4, 6, 8 and 10 are listed in table 2.

**Table 1**

| | | aromatic polyamide composite separator prepared in embodiment 1 | PET-coated aluminum oxide separator | Polyolefin-coated aluminum oxide separator | Polyolefin separator |
|---|---|---|---|---|---|
| 120°C | TD | 0.0% | 0.0% | 1.8% | 6.0% |
| | MD | 0.0% | 0.6% | 1.8% | 3.0% |
| 200°C | TD | 0.0% | 0.0% | cracked | shrunk |
| | MD | 0.2% | 0.7% | | |
| 300°C | TD | 0.3% | cracked | / | / |
| | MD | 0.3% | | / | / |
| 400°C | TD | 0.5% | / | / | / |
| | MD | 0.5% | / | / | / |
| 500°C | TD | 0.5% | / | / | / |
| | MD | 0.6% | / | / | / |
| 600°C | TD | 0.8% | / | / | / |
| | MD | 1.2% | / | / | / |

**Table 2**

| | thickness ( µm ) | air permeability ( s/100CC) | porosity of aromatic polyamide ( %) | tensile strength (Mpa) | thermal shrinkage percentage (500°C , 1h) | |
|---|---|---|---|---|---|---|
| | | | | | TD (%) | MD (%) |
| Embodiment 1 | 23 | 136 | 61 | 130 | 0.3 | 0.5 |
| Embodiment 4 | 22 | 120 | 65 | 153 | 0.2 | 0.6 |
| Embodiment 6 | 25 | 160 | 58 | 160 | 0.2 | 0.3 |
| Embodiment 8 | 20 | 87 | 70 | 125 | 0.4 | 0.7 |
| Embodiment 10 | 20 | 83 | 68 | 128 | 0.3 | 0.6 |

## Claims

1. An aromatic polyamide composite separator, **characterized in that** the aromatic polyamide composite separator comprises glass fiber and aromatic polyamide, the aromatic polyamide is coated on the glass fiber, a porosity of the aromatic polyamide is in a range of 40-80%, a thermal shrinkage percentage of the composite separator is less than 3% at 300°C; for example less than 1%; and/or the thermal shrinkage percentage of the composite separator is less than 5% at 500°C; for example less than 3%; for another example less than 1%, with all of the above parameters being measured as disclosed in the specification.

2. The aromatic polyamide composite separator of claim **1,** wherein an air permeability of the composite separator is in a range of 50-500s/100cc; for example 80-300s/100cc; for another example 90-200s/100cc; a thickness of the composite separator is in a range of 12-40µm, for example 15-30µm, for another example 18-25µm; and/or a tensile strength of the composite separator is 50-300MPa; for example 80-250MPa; for another example 100-200MPa, with all of the above parameters being measured as disclosed in the specification.

3. The aromatic polyamide composite separator of claim **1,** wherein the aromatic polyamide is at least one selected from the group consisting of poly(p-phenylene terephthamide), poly(m-phenylene isophthalamide), poly(p-benzamide) and polysulfone amide; a porosity of the aromatic polyamide is in a range of 45-75%, for another example 50-70%; and/or a content of the aromatic polyamide is in a range of 10-60wt%, for example 20-50wt%, with porosity being measured as disclosed in the specification.

4. The aromatic polyamide composite separator of claim **1,** wherein the glass fiber is fiberglass fabric; a thickness of the fiberglass fabric is in a range of 8-50µm, for example 10-30µm, for another example 12-30µm; and/or a diameter of monofilament glass fiber in the fiberglass fabric is less than or equals to 15 µm, for example less than or equals to 8µm, for another example less than or equals to 5µm.

5. A method for preparing the aromatic polyamide composite separator of claim **1, characterized in that** the method comprising the following steps: (1) providing at least one ionic liquid, at least one aromatic polyamide and at least one solvent, mixing the ionic liquid, the aromatic polyamide and the solvent to form a mixed solution; (2) immersing glass fibers into the mixed solution to form glass fibers immersed with the mixed solution, or coating the mixed solution onto surfaces of the glass fibers to form glass fibers coated with the mixed solution, and then leading the glass fibers immersed or coated with the mixed solution into a coagulation bath to form a membrane therein; (3) extracting the membrane with an extractant to remove the ionic liquid and solvents therein, and then drying the membrane to yield the composite separator.

6. The method of claim **5,** wherein step (3) comprises extracting the membrane with an extractant to remove the ionic liquid and the solvents, drying the membrane, and treating the membrane under high-temperature to form the composite separator; a temperature for treating the membrane under high-temperature is in a range of 200-350°C, for example 250-300°C; a time for treating the membrane under high-temperature is in a range of 5-40 minutes, for example 10-20 minutes; and/or the treating the membrane under high-temperature is hot air heating and/or infrared heating.

7. The method of claim **5,** wherein the ionic liquid is at least one selected from the group consisting of quaternary ammonium salt, quaternary phosphonium salt, imidazolium onium salt, pyridinium onium salt, piperidinium salt and pyrrolidine salt; and/or
the aromatic polyamide is at least one selected from the group consisting of poly(p-phenylene terephthamide), poly(m-phenylene isophthalamide), poly(p-benzamide) and polysulfone amide; the aromatic polyamide is aromatic polyamide fiber.

8. The method of claim **5,** wherein a mass ratio of the ionic liquid to the aromatic polyamide is in a range from 2:1 to 10:1; for example from 3:1 to 9:1; for another example from 3:1 to 6:1.

9. The method of claim **5,** wherein forming a mixed solution in step (1) is implemented by at least one of the following:
mixing an ionic liquid with a first solvent to form an ionic liquid solution; mixing an aromatic polyamide with a second solvent to form an aromatic polyamide solution; and mixing the ionic liquid solution with the aromatic polyamide solution to obtain the mixed solution; or
mixing an ionic liquid with a first solvent to form an ionic liquid solution; forming an aromatic polyamide solution by polymerization, wherein a second solvent is applied in the polymerization; and mixing the ionic liquid solution with the aromatic polyamide solution to obtain the mixed solution; or
mixing the ionic liquid, the aromatic polyamide and a third solvent to form the mixed solution.

10. The method of claim **9,** wherein the first solvent is at least one selected from the group consisting of water, ethanol, propanol, isopropanol, glycerol, tetrahydrofuran, pyridine, dichloromethane, trichloromethane, ethyl acetate, N,N-dimethyl formamide, N,N-dimethyl acetamide, N-methyl pyrrolidone and polyethylene glycol; and/or a mass ratio of the first solvent to the ionic liquid is in a range from 0.05:1 to 0.8:1, for example from 0.1: 1 to 0.5:1.

11. The method of claim **9,** wherein the second solvent is at least one selected from the group consisting of N-methyl pyrrolidone, N,N-dimethyl acetamide, N,N-dimethyl formamide, dimethyl sulfoxide and tri-ethyl phosphate; and/or a mass ratio of the second solvent to the aromatic polyamide is in a range from 4:1 to 15:1, for example from 5:1 to 10:1.

12. The method of claim **9,** wherein the third solvent is at least one selected from the following: N-methyl pyrrolidone, N,N-dimethyl acetamide, N,N-dimethyl formamide and dimethyl sulfoxide; and/or a mass fraction of the third solvent in the mixed solution is 20-80%, for example 40-70%.

13. The method of claim **5,** wherein the coagulation bath comprises a first component, and the first component is water or dichloromethane; the coagulation bath further comprises a second component, and the second component is at least one selected from the group consisting of N-methyl pyrrolidone, N,N-dimethyl acetamide, N,N-dimethyl formamide, dimethyl sulfoxide and triethyl phosphate; a mass fraction of water or dichloromethane in the coagulation bath is in a range of 10-99.9%; for example 20-80%; for another example 30-60%; a temperature of the coagulation bath is in a range of 0-80°C, for example 20-60°C.

14. The method of claim **5,** wherein a time for forming the membrane in step (2) is in a range of 10-250 seconds; for example 20-150 seconds; and/or
the extractant in step (3) is at least one selected from the group consisting of water, dichloromethane, trichlormethane and ethanol; and/or a temperature of the extractant is in a range of 20-100°C, for example 30-80°C; and/or the drying is infrared drying and/or hot air drying; and/or a drying temperature is in a range of 50-150°C, for example 80-120°C.

15. A secondary battery, **characterized in that** the battery comprising the aromatic polyamide composite separator of claims **1-4.**

## Patentansprüche

1. Verbundseparator aus aromatischem Polyamid, **dadurch gekennzeichnet, dass** der Verbundseparator aus aromatischem Polyamid Glasfasern und aromatisches Polyamid umfasst, das aromatische Polyamid auf die Glasfaser aufgetragen ist, eine Porosität des aromatischen Polyamids in einem Bereich von 40-80 % liegt, ein thermischer Schrumpfungsprozentsatz des Verbundseparators weniger als 3 % bei 300 °C beträgt; beispielsweise weniger als 1 %; und/oder der thermische Schrumpfungsprozentsatz des Verbundseparators weniger als 5 % bei 500 °C beträgt; beispielsweise weniger als 3 %; als weiteres Beispiel weniger als 1 %, wobei alle vorstehend genannten Parameter wie in der Beschreibung offenbart gemessen werden.

2. Verbundseparator aus aromatischem Polyamid nach Anspruch **1,** wobei die Luftdurchlässigkeit des Verbundseparators in einem Bereich von 50-500 s/100 cc liegt; beispielsweise 80-300 s/100 cc; als weiteres Beispiel 90-200 s/100 cc; eine Dicke des Verbundseparators in einem Bereich von 12-40 um liegt, beispielsweise 15-30 µm, als weiteres Beispiel 18-25 µm; und/oder eine Zugfestigkeit des Verbundseparators 50-300 MPa beträgt; beispielsweise 80-250 MPa; als weiteres Beispiel 100-200 MPa, wobei alle vorstehend genannten Parameter wie in der Beschreibung offenbart gemessen werden.

3. Verbundseparator aus aromatischem Polyamid nach Anspruch 1, wobei das aromatische Polyamid mindestens eines ausgewählt aus der Gruppe bestehend aus Poly(p-phenylenterephthamid), Poly(m-phenylenisophthalamid), Poly(p-benzamid) und Polysulfonamid ist; eine Porosität des aromatischen Polyamids in einem Bereich von 45-75 % liegt, als weiteres Beispiel 50-70 %; und/oder ein Gehalt des aromatischen Polyamids in einem Bereich von 10-60 Gew.-% liegt, beispielsweise 20-50 Gew.-%, wobei die Porosität wie in der Beschreibung offenbart gemessen wird.

4. Verbundseparator aus aromatischem Polyamid nach Anspruch **1,** wobei die Glasfaser Glasfasergewebe ist; eine Dicke des Glasfasergewebes in einem Bereich von 8-50 µm liegt, beispielsweise 10-30 µm, als weiteres Beispiel 12-30 µm; und/oder ein Durchmesser der Monofilament-Glasfaser im Glasfasergewebe kleiner oder gleich 15 µm ist, beispielsweise kleiner oder gleich 8 µm, als weiteres Beispiel kleiner oder gleich 5 µm.

5. Verfahren zum Herstellen des Verbundseparators aus aromatischem Polyamid nach Anspruch 1, **dadurch gekennzeichnet, dass** das Verfahren die folgenden Schritte umfasst: (1) Bereitstellen mindestens einer ionischen Flüssigkeit, mindestens eines aromatischen Polyamids und mindestens eines Lösungsmittels, Mischen der ionischen Flüssigkeit, des aromatischen Polyamids und des Lösungsmittels, um eine gemischte Lösung zu bilden; (2) Eintauchen von Glasfasern in die gemischte Lösung, um in die gemischte Lösung eingetauchte Glasfasern zu bilden, oder Auftragen der gemischten Lösung auf Oberflächen der Glasfasern, um mit der gemischten Lösung beschichtete Glasfasern zu bilden, und anschließendes Einführen der in die gemischte Lösung eingetauchten oder beschichteten Glasfasern in ein Koagulationsbad, um darin eine Membran zu bilden; (3) Extrahieren der Membran mit einem Extraktionsmittel, um die ionische Flüssigkeit und die darin enthaltenen Lösungsmittel zu entfernen, und anschließendes Trocknen der Membran, um den Verbundseparator zu ergeben.

6. Verfahren nach Anspruch 5, wobei Schritt (3) Extrahieren der Membran mit einem Extraktionsmittel zum Entfernen der ionischen Flüssigkeit und der Lösungsmittel, Trocknen der Membran und Behandeln der Membran bei hoher Temperatur zur Bildung des Verbundseparators umfasst; eine Temperatur zum Behandeln der Membran bei hoher Temperatur in einem Bereich von 200-350 °C liegt, beispielsweise 250-300 °C; eine Zeit zum Behandeln der Membran bei hoher Temperatur in einem Bereich von 5-40 Minuten liegt, beispielsweise 10-20 Minuten; und/oder das Behandeln der Membran unter hoher Temperatur eine Heißlufterwärmung und/oder Infraroterwärmung ist.

7. Verfahren nach Anspruch 5, wobei die ionische Flüssigkeit mindestens eine ausgewählt aus der Gruppe bestehend aus quartärem Ammoniumsalz, quartärem Phosphoniumsalz, Imidazoliumoniumsalz, Pyridiniumoniumsalz, Piperidiniumsalz und Pyrrolidinsalz ist; und/oder
das aromatische Polyamid mindestens eines ausgewählt aus der Gruppe bestehend aus Poly(p-phenylenterephthamid), Poly(m-phenylenisophthalamid), Poly(p-benzamid) und Polysulfonamid ist; wobei das aromatische Polyamid eine aromatische Polyamidfaser ist.

8. Verfahren nach Anspruch **5,** wobei ein Massenverhältnis der ionischen Flüssigkeit zum aromatischen Polyamid in einem Bereich von 2:1 bis 10:1 liegt; beispielsweise von 3:1 bis 9:1; als weiteres Beispiel von 3:1 bis 6:1.

9. Verfahren nach Anspruch **5,** wobei Bilden einer gemischten Lösung in Schritt (1) durch mindestens einen der folgenden Schritte umgesetzt wird:
Mischen einer ionischen Flüssigkeit mit einem ersten Lösungsmittel, um eine ionische Flüssigkeitslösung zu bilden; Mischen eines aromatischen Polyamids mit einem zweiten Lösungsmittel, um eine aromatische Polyamidlösung zu bilden; und Mischen der ionischen Flüssigkeitslösung mit der aromatischen Polyamidlösung, um die gemischte Lösung zu erlangen; oder
Mischen einer ionischen Flüssigkeit mit einem ersten Lösungsmittel, um eine ionische Flüssigkeitslösung zu bilden; Bilden einer aromatischen Polyamidlösung durch Polymerisation, wobei bei der Polymerisation ein zweites Lösungsmittel angewendet wird; und Mischen der ionischen Flüssigkeitslösung mit der aromatischen Polyamidlösung, um die gemischte Lösung zu erlangen; oder
Mischen der ionischen Flüssigkeit, des aromatischen Polyamids und eines dritten Lösungsmittels, um die gemischte Lösung zu bilden.

10. Verfahren nach Anspruch 9, wobei das erste Lösungsmittel mindestens eines ausgewählt aus der Gruppe bestehend aus Wasser, Ethanol, Propanol, Isopropanol, Glycerin, Tetrahydrofuran, Pyridin, Dichlormethan, Trichlormethan, Ethylacetat, N,N-Dimethylformamid, N,N-Dimethylacetamid, N-Methylpyrrolidon und Polyethylenglykol ist; und/oder ein Massenverhältnis des ersten Lösungsmittels zur ionischen Flüssigkeit in einem Bereich von 0,05:1 bis 0,8:1 liegt, beispielsweise von 0,1:1 bis 0,5:1.

11. Verfahren nach Anspruch 9, wobei das zweite Lösungsmittel mindestens eines ausgewählt aus der Gruppe bestehend aus N-Methylpyrrolidon, N,N-Dimethylacetamid, N,N-Dimethylformamid, Dimethylsulfoxid und Triethylphosphat ist; und/oder ein Massenverhältnis des zweiten Lösungsmittels zum aromatischen Polyamid in einem Bereich von 4:1 bis 15:1 liegt, beispielsweise von 5:1 bis 10:1.

12. Verfahren nach Anspruch **9,** wobei das dritte Lösungsmittel mindestens eines ausgewählt aus den folgenden ist: N-Methylpyrrolidon, N,N-Dimethylacetamid, N,N-Dimethylformamid und Dimethylsulfoxid; und/oder ein Massenanteil des dritten Lösungsmittels in der Mischlösung 20-80 % beträgt, beispielsweise 40-70 %.

13. Verfahren nach Anspruch **5,** wobei das Koagulationsbad eine erste Komponente umfasst und die erste Komponente Wasser oder Dichlormethan ist; das Koagulationsbad ferner eine zweite Komponente umfasst und die zweite Komponente mindestens eine ausgewählt aus der Gruppe bestehend aus N-Methylpyrrolidon, N,N-Dimethylacetamid, N,N-Dimethylformamid, Dimethylsulfoxid und Triethylphosphat ist; ein Massenanteil an Wasser oder Dichlormethan im Koagulationsbad in einem Bereich von 10-99,9 % liegt; beispielsweise 20-80 %; als weiteres Beispiel 30-60 %; eine Temperatur des Koagulationsbades in einem Bereich von 0-80 °C liegt, beispielsweise 20-60 °C.

14. Verfahren nach Anspruch **5,** wobei die Zeit zum Bilden der Membran in Schritt (2) in einem Bereich von 10-250 Sekunden liegt; beispielsweise 20-150 Sekunden; und/oder
das Extraktionsmittel in Schritt (3) mindestens eines ausgewählt aus der Gruppe bestehend aus Wasser, Dichlormethan, Trichlormethan und Ethanol ist; und/oder die Temperatur des Extraktionsmittels in einem Bereich von 20-100 °C liegt, beispielsweise 30-80°C; und/oder die Trocknung eine Infrarottrocknung und/oder Heißlufttrocknung ist; und/oder die Trocknungstemperatur in einem Bereich von 50-150 °C liegt, beispielsweise 80-120 °C.

15. Sekundärbatterie, **dadurch gekennzeichnet, dass** die Batterie den Verbundseparator aus aromatischem Polyamid gemäß den Ansprüchen **1-4** umfasst.

## Revendications

1. Séparateur composite de polyamide aromatique, **caractérisé en ce que** le séparateur composite de polyamide aromatique comprend de la fibre de verre et du polyamide aromatique, le polyamide aromatique est appliqué sur la fibre de verre, une porosité du polyamide aromatique se situe dans une plage de 40 à 80 %, un pourcentage de retrait thermique du séparateur composite est inférieur à 3 % à 300 °C ; par exemple moins de 1 % ; et/ou le pourcentage de retrait thermique du séparateur composite est inférieur à 5 % à 500 °C ; par exemple moins de 3 % ; pour un autre exemple, moins de 1 %, tous les paramètres ci-dessus étant mesurés comme décrit dans la spécification.

2. Séparateur composite de polyamide aromatique selon la revendication **1,** dans lequel la perméabilité à l'air du séparateur composite se situe dans une plage de 50 à 500 s/100 cc ; par exemple 80 à 300 s/100 cc ; pour un autre exemple de 90 à 200 s/100 cc ; une épaisseur du séparateur composite se situe dans une plage de 12 à 40 µm, par exemple de 15 à 30 µm, pour un autre exemple de 18 à 25 µm ; et/ou une résistance à la traction du séparateur composite se situe dans une plage de 50 à 300 MPa ; par exemple de 80 à 250 MPa ; pour un autre exemple de 100 à 200 MPa, tous les paramètres ci-dessus étant mesurés comme indiqué dans la spécification.

3. Séparateur composite de polyamide aromatique selon la revendication **1,** dans lequel le polyamide aromatique est au moins un choisi dans le groupe constitué de poly(p-phénylène téréphtamide), de poly(m-phénylène isophtalamide), de poly(p-benzamide) et de polysulfone amide ; une porosité du polyamide aromatique se situe dans une plage de 45 à 75 %, pour un autre exemple de 50 à 70 % ; et/ou une teneur en polyamide aromatique se situe dans une plage de 10 à 60 % en poids, par exemple de 20 à 50 % en poids, la porosité étant mesurée comme décrit dans la spécification.

4. Séparateur composite de polyamide aromatique selon la revendication **1,** dans lequel la fibre de verre est un tissu en fibre de verre ; une épaisseur du tissu en fibre de verre se situe dans une plage de 8 à 50 µm, par exemple de 10 à 30 µm, pour un autre exemple de 12 à 30 µm ; et/ou un diamètre de fibre de verre monofilament dans le tissu en fibre de verre est inférieur ou égal à 15 µm, par exemple inférieur ou égal à 8 µm, pour un autre exemple inférieur ou égal à 5 µm.

5. Procédé de préparation du séparateur composite de polyamide aromatique selon la revendication **1, caractérisé en ce que** le procédé comprenant les étapes suivantes : (1) la fourniture d'au moins un liquide ionique, d'au moins un polyamide aromatique et d'au moins un solvant, le mélange du liquide ionique, du polyamide aromatique et du solvant pour former une solution mixte ; (2) l'immersion de fibres de verre dans la solution mixte pour former des fibres de verre immergées avec la solution mixte, ou l'application de la solution mixte sur les surfaces des fibres de verre pour former des fibres de verre revêtues de la solution mixte, puis le fait de conduire les fibres de verre immergées ou revêtues de la solution mixte dans un bain de coagulation pour y former une membrane ; (3) l'extraction de la membrane avec un agent d'extraction pour éliminer le liquide ionique et les solvants qu'elle contient, puis le séchage de la membrane pour donner le séparateur composite.

6. Procédé selon la revendication **5,** dans lequel l'étape (3) comprend l'extraction de la membrane avec un agent d'extraction pour éliminer le liquide ionique et les solvants, le séchage de la membrane et le traitement de la membrane à haute température pour former le séparateur composite ; une température pour traiter la membrane à haute température se situe dans une plage de 200 à 350 °C, par exemple de 250 à 300 °C ; un temps de traitement de la membrane à haute température se situe dans une plage de 5 à 40 minutes, par exemple de 10 à 20 minutes ; et/ou le traitement de la membrane à haute température est un chauffage à air chaud et/ou un chauffage infrarouge.

7. Procédé selon la revendication **5,** dans lequel le liquide ionique est au moins un liquide choisi dans le groupe constitué d'un sel d'ammonium quaternaire, d'un sel de phosphonium quaternaire, d'un sel d'imidazolium onium, d'un sel de pyridinium onium, d'un sel de pipéridinium et d'un sel de pyrrolidine ; et/ou
le polyamide aromatique est au moins un élément choisi dans le groupe constitué par le poly(p-phénylène téréphtalamide), le poly(m-phénylène isophtalamide), le poly(p-benzamide) et le polysulfone amide ; le polyamide aromatique est une fibre de polyamide aromatique.

8. Procédé selon la revendication **5,** dans lequel un rapport de masse du liquide ionique au polyamide aromatique est compris entre 2:1 et 10:1 ; par exemple entre 3:1 et 9:1 ; pour un autre exemple entre 3:1 et 6:1.

9. Procédé selon la revendication **5,** dans lequel la formation d'une solution mixte lors de l'étape (1) est mise en œuvre par au moins l'une des opérations suivantes :
le mélange d'un liquide ionique avec un premier solvant pour former une solution liquide ionique ; le mélange d'un polyamide aromatique avec un deuxième solvant pour former une solution de polyamide aromatique ; et le mélange de la solution liquide ionique avec la solution de polyamide aromatique pour obtenir la solution mixte ; ou
le mélange d'un liquide ionique avec un premier solvant pour former une solution liquide ionique ; la formation d'une solution de polyamide aromatique par polymérisation, dans lequel un deuxième solvant est appliqué dans la polymérisation ; et le mélange de la solution liquide ionique avec la solution de polyamide aromatique pour obtenir la solution mixte ; ou
le mélange du liquide ionique, le polyamide aromatique et un troisième solvant pour former la solution mixte.

10. Procédé selon la revendication **9,** dans lequel le premier solvant est au moins un solvant choisi dans le groupe constitué par l'eau, l'éthanol, le propanol, l'isopropanol, le glycérol, le tétrahydrofurane, la pyridine, le dichlorométhane, le trichlorométhane, l'acétate d'éthyle, le N,N-diméthylformamide, le N,N-diméthylacétamide, le N-méthylpyrrolidone et le polyéthylène glycol ; et/ou un rapport de masse du premier solvant au liquide ionique est compris entre 0,05:1 et 0,8:1, par exemple entre 0,1:1 et 0,5:1.

11. Procédé selon la revendication **9,** dans lequel le deuxième solvant est au moins un solvant choisi dans le groupe constitué de N-méthylpyrrolidone, de N,N-diméthylacétamide, de N,N-diméthylformamide, de diméthylsulfoxyde et de phosphate de triéthyle ; et/ou un rapport de masse du deuxième solvant au polyamide aromatique est compris entre 4:1 et 15:1, par exemple entre 5:1 et 10:1.

12. Procédé selon la revendication **9,** dans lequel le troisième solvant est au moins un solvant choisi parmi les suivants : N-méthylpyrrolidone, N,N-diméthylacétamide, N,N-diméthylformamide et diméthylsulfoxyde ; et/ou une fraction massique du troisième solvant dans la solution mixte est de 20 à 80 %, par exemple de 40 à 70 %.

13. Procédé selon la revendication **5,** dans lequel le bain de coagulation comprend un premier composant, et le premier composant est de l'eau ou du dichlorométhane ; le bain de coagulation comprend en outre un second composant, et le second composant est au moins un élément choisi dans le groupe constitué de N-méthylpyrrolidone, N,N-diméthylacétamide, N,N-diméthylformamide, diméthylsulfoxyde et phosphate de triéthyle ; une fraction massique d'eau ou de dichlorométhane dans le bain de coagulation se situe dans une plage de 10 à 99,9 % ; par exemple de 20 à 80 % ; pour un autre exemple de 30 à 60 % ; une température du bain de coagulation se situe dans une plage de 0 à 80 °C, par exemple de 20 à 60 °C.

14. Procédé selon la revendication **5,** dans lequel le temps de formation de la membrane lors de l'étape (2) se situe dans une plage de 10 à 250 secondes ; par exemple de 20 à 150 secondes ; et/ou
l'agent d'extraction lors de l'étape (3) est au moins un élément choisi dans le groupe constitué par l'eau, le dichlorométhane, le trichlorométhane et l'éthanol ; et/ou une température de l'agent d'extraction se situe dans une plage de 20 à 100 °C, par exemple de 30 à 80 °C ; et/ou le séchage est un séchage infrarouge et/ou un séchage à air chaud ; et/ou une température de séchage se situe dans une plage de 50 à 150 °C, par exemple de 80 à 120 °C.

15. Batterie secondaire, **caractérisée en ce que** la batterie comprenant le séparateur composite de polyamide aromatique selon les revendications **1 à 4.**
